# EUROPEAN PATENT APPLICATION

(11) **EP 0 720 019 A1**
(43) Date of publication of application: **03.07.1996**
(21) Application number: 95120225.8
(22) Date of filing: 20.12.1995
(51) Int. Cl.: G01N 30/32, F16K 17/04

(54) **Liquid analyzing apparatus**

(30) Priority: 28.12.1994 JP 326632/94
(71) Applicant: HITACHI, LTD., Chiyoda-ku, Tokyo 101 (JP)
(72) Inventor: Kiwao, Seki, Hitachinaka-shi, Ibaraki 312 (JP); Sadabumi, Ohnuma, Hitachi-shi, Ibaraki 316 (JP)
(74) Representative: Strehl Schübel-Hopf Groening & Partner

(57) **Abstract**

In a liquid chromatographic analyzer, the liquid is leaked by providing a spring member (7) between the cell and the seal (6) in a tube connecting portion when the pressure is increased. Further, a tube for blocking light from a tube is connected to the cell to allow the leaked liquid to flow through in the light-proof tube.

## Description

The present invention relates to a liquid analyzing apparatus having a liquid analyzing flow cell such as a liquid chromatographic analyzer and a flow injection analyzer.

A common liquid chromatographic analyzer is constructed in such that liquid or sample to be used for analysis is pumped using a pump having a high delivery pressure since a column having a large flow resistance.

A flow cell is connected in the downstream of the column to measure the separated sample.

However, there are some cases where the delivery pressure becomes so high due to change in various conditions that the column and the flow cell or the flow passage between them might be damaged if such a condition is left as it is.

In order to solve the disadvantage, an invention is disclosed in Japanese Patent Application Laid-Open No.6-160271 (1994). In Japanese Patent Application Laid-Open No.6-160271 (1994), a bypass flow passage having a flow control valve is provided in parallel to the flow passage connected to the flow cell, and the pressure burden applied to the flow cell is properly removed by controlling the flow control valve based on a value indicating a pressure gauge detecting the pressure from a liquid delivery means.

However, in a liquid chromatographic analyzer dealing with a small flow rate, the volume of the flow passage between the column and the flow cell should be made so small that the delivered liquid to the flow cell does not stay to suppress diffusion of the sample. Therefore, it is impossible to connect a protecting means against occurrence of abnormal pressure such as a pressure gauge and a safety valve, as described in Japanese Patent Application Laid-Open No.6-160271, which increases the volume of flow passage.

That is, a means for detecting abnormality cannot be installed and the pressure increase due to occurrence of abnormal pressure cannot be detected even if the abnormal pressure occurs. Therefore, there has been a problem in that measures against the abnormal pressure cannot be provided and the flow cell or the tube is damaged.

An object of the present invention is to solve the above problem and to provide a liquid analyzing apparatus having a protecting means against occurrence of abnormal pressure without increasing the volume of a flow passage.

A liquid analyzing apparatus comprising a liquid supplying passage and a liquid discharging passage, and a liquid flow passage formed by providing a liquid analyzing flow cell between the liquid supplying passage and the liquid discharging passage, wherein a pressure release port is provided in the liquid flow passage, the pressure release port squeezing out pressure outside the liquid supplying passage with the pressing force of the pressure when the pressure exceeding the certain value determined by the withstanding pressure the flow cell is applied to the flow cell, the liquid supplying passage or the liquid discharging passage.

The liquid supplying passage or the liquid discharging passage is constructed in a two-layer structure, and the end portion of the outer layer is constructed to be kept liquid-proof and the end portion of the inner layer is pushed to the flow cell using a spring member or the like.

Further, the outer layer of the liquid discharging passage is formed of a light-proof material.

Since a seal structure using the spring member is provided in a connecting mechanism between the flow cell and the tube and the liquid flowing the flow passage is discharged from the connecting portion when the pressure is increased above an allowable value, it is possible to prevent the pressure from excessively increasing.

The tube is formed in a double tube structure, and the tube in the outer side is also connected to the outer wall of the flow cell to allow the discharged liquid to flow between the tube in the center and the tube in the outer side. By this construction, the discharged liquid can be conducted outside the analyzing apparatus together with the liquid flowing the tube in the center.

In that case, by forming also the tube in the outer side with a light-proof material, the light-proof function for the tube in the center can be obtained at the same time, and number of tubes extending from the apparatus can be decreased.

In a liquid analyzing apparatus, in order to protect against damage of the cell or the piping tubes when the flow resistance of the flow passage is abnormally increased by blockage of the flow passage or the like, a protection mechanism against the abnormal pressure can be realized without increasing the volume of the flow passage.

Even if liquid is discharged outside the cell at operation of the protective function at occurrence of an abnormal pressure, the liquid can be discharged outside the analyzing apparatus without leakage inside the analyzing apparatus.

In an analyzing apparatus using light, it is necessary to block light from entering from the external into the apparatus. The tubes extending outside from the apparatus can be made light-proof, and number of the tubes can be minimized.

Embodiments of the present invention will be described, by way of example, with reference to the accompanying drawings in which:
FIG.1 is a view showing the construction of a cell in accordance with the present invention,
FIG.2 is a view showing a spectroscopic analyzer to which the present invention is applied,
FIG.3 is a detailed cross-sectional view showing the construction of a cell in accordance with the present invention,
FIG.4 is a detailed cross-sectional view showing a state where liquid flows out in a cell in accordance with the present invention,
FIG.5 is a view showing the construction of a cell in an electric conductivity detector to which the present invention is applied,
FIG.6 is a view showing the construction of a cell having a cleaning function to which the present invention is applied, and
FIG.7 is a view showing construction of a liquid discharging passage having an abnormal pressure detecting means in accordance with the present invention.

Initially, description will be made on an embodiment of an apparatus for performing absorptiometric analysis of liquid to which the present invention is applied.

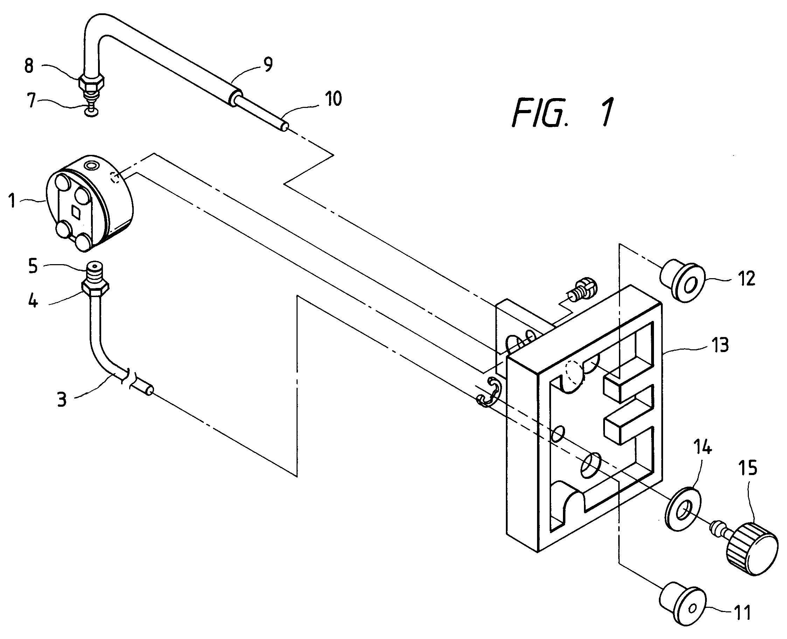

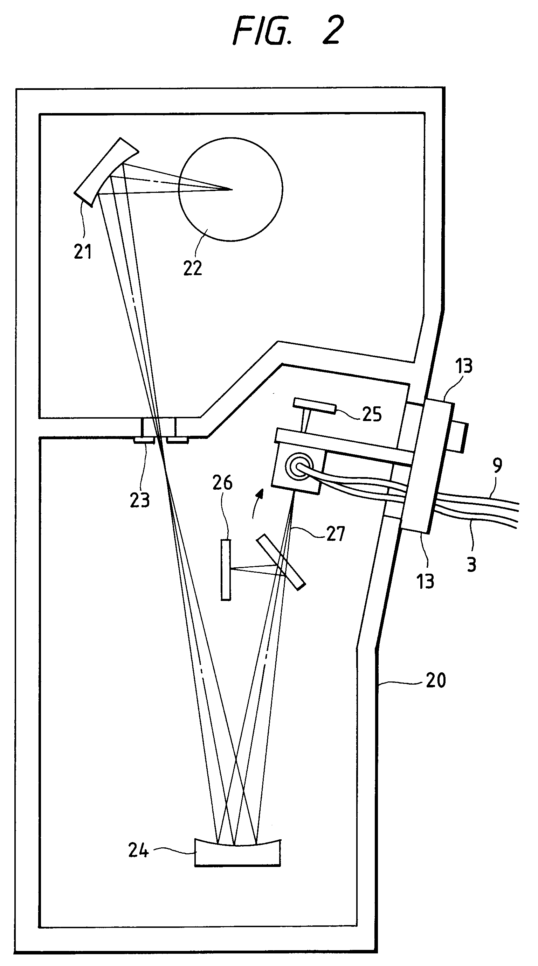

FIG.1 is a view showing the construction of a cell unit in accordance with the present invention. In an absorbance detector in a liquid chromatographic apparatus, a cell unit 1 is mounted in a spectroscope as shown in FIG.2, and has a function to conduct the liquid flowing out from a column outside the spectroscope into the spectroscope and allow the liquid to flow a given distance in a light path.

In FIG.2, light emitted from a lamp 22 is gathered by a light-gathering mirror 21, and scattered into individual wavelengths by a diffraction grating 24 after passing through a slit 23. Then a part of the light enters into a light receiving element 26 to be directly converted to an electric signal. After passing through a cell unit 1, the other of the light enters into a light receiving element 25 to be converted to an electric signal. By obtaining the ratio of the two electric signals, the light absorptivity of the liquid flowing through the inside of the flow cell in the cell unit 1 is measured.

As is described above, in the liquid chromatographic apparatus, it is necessary to conduct liquid existing the external into the spectroscope to be measured. Therefore, there is possibility that the liquid flows into the cell unit in the spectroscope through the liquid flow passage.

Since the liquid flows out to a waste liquid bottle (drain) outside the spectroscope through an outlet tube 10 after completion of light absorptivity measurement in the cell unit, there is possibility that light enters through the side of the liquid discharging passage.

Since quantity of light is measured in the spectroscope, external light must be prevented from entering in the spectroscope. Therefore, a light-proof tube 9 covers the outlet tube 10 prevent external light from entering into the spectroscope through the outlet tube 10 or the gap between the outlet tube 10 and a packing 12. Further, by forming the tube in a two-layer structure and consequently decreasing number of tubes, the possibility to conduct external light to the flow cell is decreased. This contributes in decreasing measurement error due to entering of external light to the flow cell.

Although the two-layer structure, which is one of the characteristics of the present invention, is employed only in the outlet tube, it may be employed in the inlet tube.

A light-proof tube 3 is constructed so that a seal is tightened to the cell unit 1 using a screw 4 to prevent leakage of liquid. Similarly, the light-proof tube 9 is also constructed so that a seal portion 6 is tightened to the cell unit 1 using a screw 8 to prevent leakage of liquid.

However, the outlet tube 10 contained in the light-proof tube 9 is connected to the flow cell contained in the cell unit 1 through a spring 7 and the seal member 6.

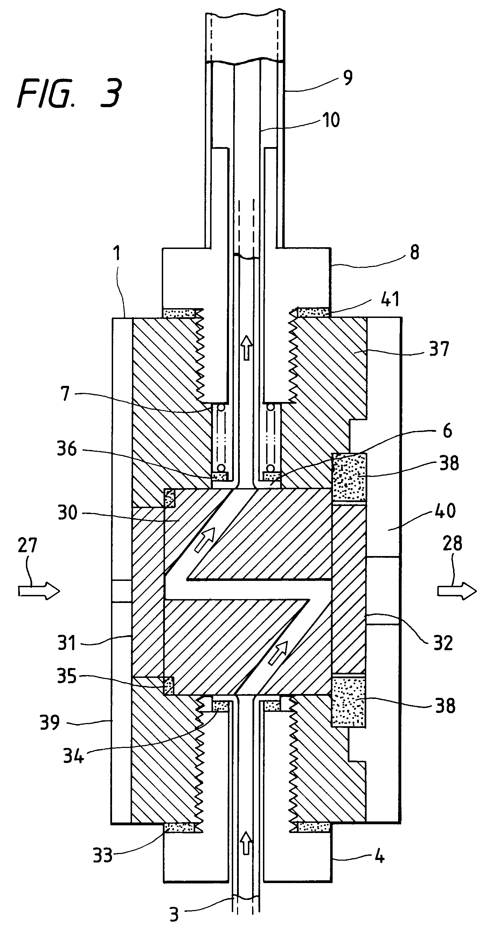

FIG.3 is an enlarged view of the flow cell explaining the connecting state.

The cell 30 is closed with window plates 31 and 32 to form a light path. The cell 30 is mounted in a holder 37 and fixed to fixing plates 39 and 40 through a seal 35 and 38.

The light-proof tube 3 is tightly fixed to the cell 30 with the screw 4 through a washer 34 in liquid-proof.

The screw 8 connecting the light-proof tube 9 is screwed to the holder 37. The end portion of the outlet tube 10 in the light-proof tube 9 is pushed to the flow cell 30 through a washer 36 with the spring 7 attached to the screw 8 (hereinafter, this pushed portion is referred to as "seal portion 6").

The outlet tube 10 is tightly fixed to the cell 30 with the screw 8 through the washer 36. Therefore, liquid flowing through the inlet tube 2 does not leak through the light path in the cell but flows to the outlet tube 10.

Incident light 27 to the cell passes through the light path in the cell 30 and goes out as an emitted light 28.

With the construction, when the pressure in the flow cell 30 is abnormally increased, a gap is formed between the seal portion 6 and the flow cell 1 to leak the liquid, and consequently the cell and the tubes are prevented from damage.

The light-proof tube 9 is connected to the screw 8, and the leaked liquid, therefore, flows between the light-proof tube 9 and the outlet tube 10. The leaked liquid is conducted outside the spectroscope without leaking into the spectroscope. Since the outlet tube 10 is commonly connected to a waste liquid bottle (drain), the leaked liquid can be conducted to the waste liquid bottle (drain) by extending the light-proof tube 9 to the front end of the outlet tube 10 without installing another tube. Since the leaked liquid does not leak into the spectroscope at occurrence of leakage, degradation or fouling due to the leaked liquid does not occur in the optical system.

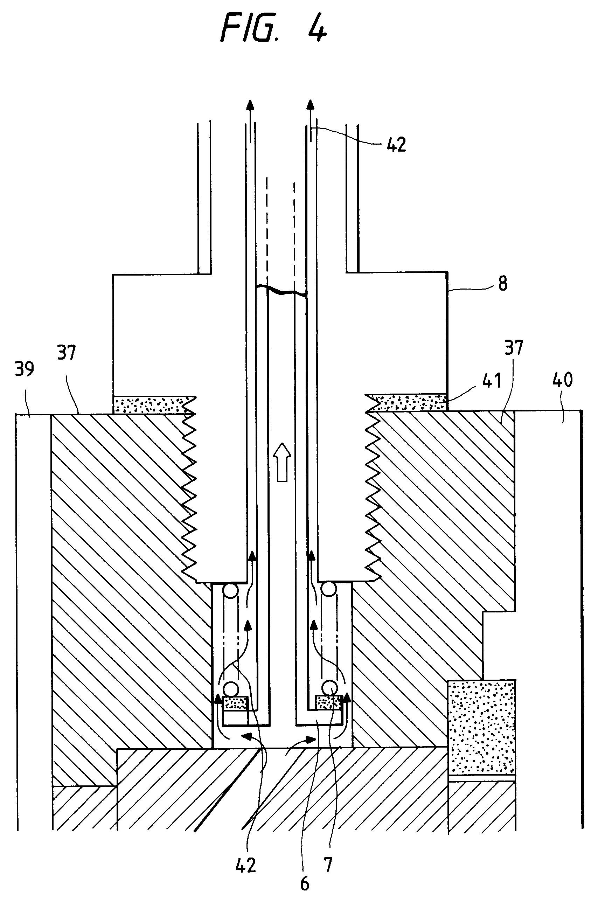

FIG.4 is an enlarged view of the vicinity of the seal portion 6.

When the internal pressure of the flow passage is increased due to any abnormality, the spring 7 is contracted and the liquid leaks from the liquid flow passage between the cell holder 37 and the seal portion 6 as shown in the figure. Since the light-proof tube 9 is connected to the screw 8, the liquid 42 leaked around the spring 7 flows between the light-proof tube 9 and the outlet tube 10.

The space between the light-proof passage 9 and the outlet tube 10, to be called as the second waste liquid passage, may be provided by making the tube in two-layer structure as in the above embodiment, but may be also provided by arranging a new tube in addition to the existing waste liquid passage. As a detailed example of construction, the connection portion of the flow cell and the tube is constructed in the same manner as the above embodiment and the two-layer tube is branched in a middle portion of the tube into an inner layer space and an outer layer space. With this construction, by looking through which waste liquid passage of the two the waste liquid flows out, it is possible to judge whether an abnormal pressure is applied to the flow cell or not.

Further, with this construction, there is an effect in that the liquid does not spill even to the external in the connecting portion of the cell and the tube where the liquid is apt to leak by nature.

Although the above embodiment according to the present invention is an example of applying to an absorbance detector, the same effect can be attained by applying the present invention to an fluorescent detector or a luminescent detector. Further, the same effect can be also attained by applying the present invention to an electric conductivity detector.

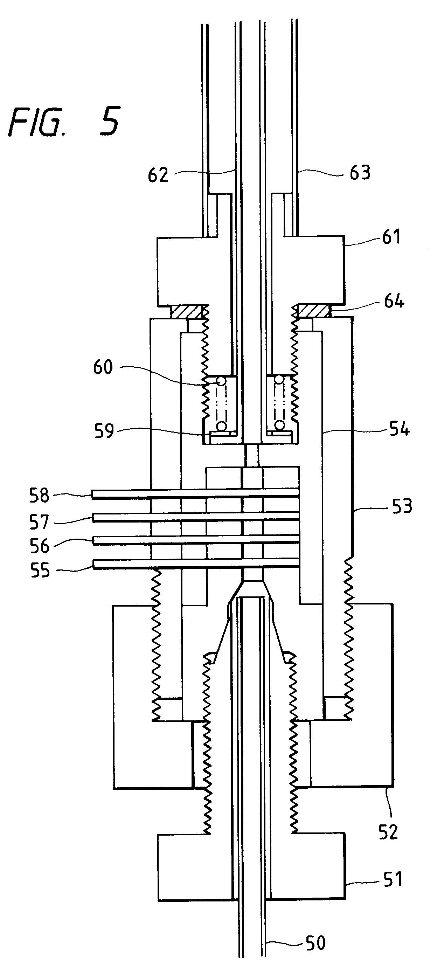

FIG.5 shows a cell in an electric conductivity detector to which the present invention is applied.

Liquid enters into the cell through a light-proof tube 50, and the liquid after its electric conductivity is measured is directed to an outlet tube 62. The outlet tube 62 is tightly pushed to a cell body 54 with a spring 60. When the inner pressure of the cell is increased by any reason, the liquid is discharged through the tightly attached portion.

Since the outlet tube 62 is covered with a tube 63 and connected to a screw 61, leaked liquid flows between the tube 62 and the tube 63 to go outside and not leaks inside the apparatus.

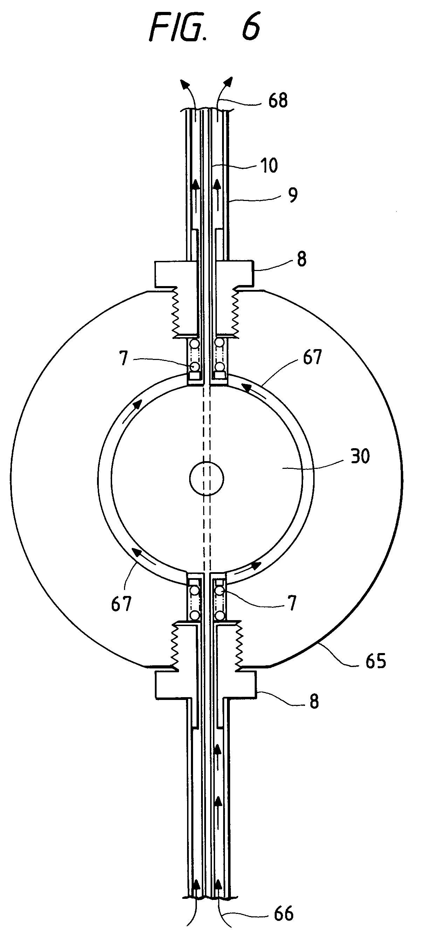

Further, as shown in FIG.6, both tubes in the inlet and in the outlet are formed in a double tube structure to use the passage between the center tube and the outer tube as a waste liquid flow passage, and both of the waste liquid flow passages are connected through the cell holder 65. With this construction, by allowing cleaning liquid 66 to flow from one end of the waste liquid flow passage, the cleaning liquid cleans the cell and the connecting portion and the flows outside. Therefore, the waste liquid flow passage and the spring mechanism can be cleaned from outside without disassembling the cell or before disassembling the cell.

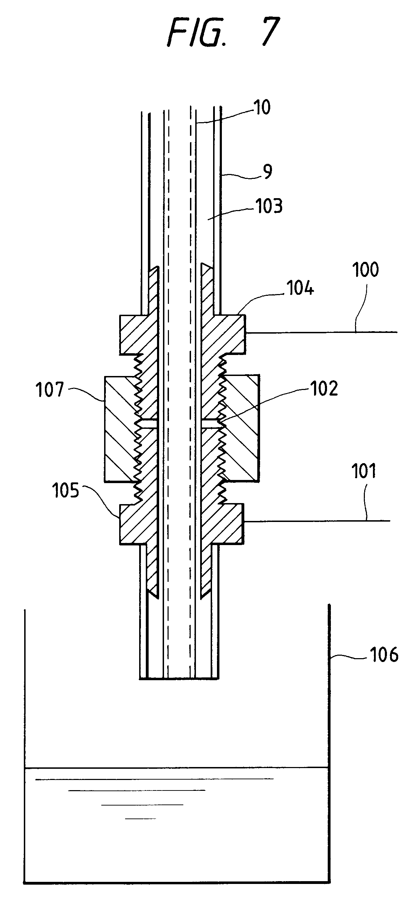

FIG.7 is a view showing a detecting means for detecting whether liquid flows between the light-proof tube and the inlet tube or between the light-prof tube and the outlet tube.

In the embodiments described above, when pressure exceeding a certain pressure value is applied to the flow cell, the liquid is leaked between the light-proof tube and the inlet tube or the outlet tube in order to release the pressure exceeding the certain pressure value.

The embodiments according to the present invention described above are constructed in such that the leaked liquid does not spill over the measuring apparatus even if leakage of the liquid is large. In a case where the leakage of the liquid is extremely large, it is necessary to confirm the cause such as abnormality in the column or blockage of the flow passage. However, in the above embodiment where the waste liquid flow tube has the two-layer structure, it is difficult to judge from which layer the liquid leaks, the inner layer or the outer layer because of using the light-proof tube.

The construction shown in FIG.7 is to solve the problem. Conductive connectors 104, 105 connected to an electrode 100 and an electrode 101 respectively are arranged in the waste liquid flow passage 103 between the light-proof tube 9 and the outlet tube 10 through an insulator plate 102. A resistivity measuring means, not shown, is connected between the electrodes 100 and 101.

When liquid flows in the waste liquid flow passage in this structure, that is, when pressure is released to the second flow passage of the waste liquid flow passage in order to protect the flow cell, the electrodes 100 and 101 are conducted by the flowing waste liquid to react to the resistivity measuring means connected. With this reaction, it is possible to confirm presence or absence of the waste liquid flow.

In a liquid chromatographic analyzer, liquid is pumped at several tens MPa because of using a column. However, the flow passage and the cell in the downstream of the column are generally constructed using materials not requiring pressure resistivity since the flow passage in the downstream of the column is in a low pressure. When an abnormal condition occurs in the downstream of the column, damage in the cell or the piping tubes cannot be avoided. However, according to the present invention, it is possible to prevent the damage since the construction can prevent pressure increase at occurrence of an abnormal condition. Further, in a conventional apparatus, when damage occurs in the flow passage, the inside of the spectroscope is fouled with the leaked liquid and the apparatus some time becomes out of use or is degraded in its performance. In the present invention, the leaked liquid can be easily conducted to a waste liquid bottle without leaking inside the spectroscope.

When the tube is broken, the liquid does not leak outside since the tube is formed in double tube structure. Therefore, the reliability is improved. Further, since these effects can be attained by not providing additional tubes, the construction can be made simple.

When leakage occurs, it is required to disassemble and clean the apparatus since the liquid is apt to crystalize at leakage position. In the present invention, since the cleaning can be easily performed only by allowing cleaning liquid to flow through the waste liquid flowing passage, the maintenance can be easily performed.

## Claims

1. A liquid analyzing apparatus comprising a liquid supplying passage (3; 50) and a liquid discharging passage (9, 10; 62, 63) and a liquid flow passage formed by providing a liquid analyzing flow cell (30; 54) between said liquid supplying passage and said liquid discharging passage, wherein a pressure release port (6, 7; 59, 60) is provided in said liquid flow passage, said pressure release port squeezing out pressure exceeding a certain value of pressure outside said liquid supplying passage with the pressing force of the pressure when the pressure exceeding the certain value of pressure is applied to said flow cell, said liquid supplying passage or said liquid discharging passage.

2. A liquid analyzing apparatus comprising a liquid supplying passage (3; 50) and a liquid discharging passage (9, 10; 62, 63), and a liquid flow passage formed by providing a liquid analyzing flow cell (30; 54) between said liquid supplying passage and said liquid discharging passage, wherein a pressure release valve (6, 7; 59, 60) is provided in said liquid supplying passage or said liquid discharging passage, said pressure release valve being forced to open by the pressure of liquid when said liquid is supplied with a pressure exceeding a certain value of pressure to said flow cell.

3. A liquid analyzing apparatus comprising a liquid supplying passage (3; 50) and a liquid discharging passage (9, 62) and a liquid flow passage formed by providing a liquid analyzing flow cell (30; 54) between said liquid supplying passage and said liquid discharging passage, wherein a pressure release port (6, 7; 59, 60) is provided between said liquid supplying passage and a second liquid discharging passage (10; 63), said pressure release port discharging liquid outside said liquid supplying passage with the force of pressure when the liquid having a pressure exceeding the certain value of pressure is applied to said flow cell, said liquid supplying passage or said liquid discharging passage.

4. The liquid analyzing apparatus according to claim 3, wherein said second liquid discharging passage (10; 63) has a pressure lower than the pressure in said liquid flow passage.

5. A liquid analyzing apparatus comprising a liquid supplying passage (3; 50), a liquid discharging passage (9, 10; 62, 63) having a two-layer structure, and a liquid flow passage formed by providing a liquid analyzing flow cell (30; 54) between said liquid supplying passage and said liquid discharging passage, wherein a pressure release port (6, 7; 59, 60) is provided in the inner layer of said liquid discharging passage having two-layer structure, said pressure release port releasing pressure exceeding a certain value of pressure with the force of pressure when the pressure exceeding the certain value of pressure is applied to said flow cell, said liquid supplying passage or said liquid discharging passage.

6. A liquid analyzing apparatus comprising a liquid supplying passage having a two-layer structure, a liquid discharging passage, and a liquid flow passage formed by providing a liquid analyzing flow cell between said liquid supplying passage and said liquid discharging passage, wherein a pressure release port is provided in the inner layer of said liquid supplying passage having two-layer structure, said pressure release port releasing pressure exceeding a certain value of pressure with the force of pressure when the pressure exceeding the certain value of pressure is applied to said flow cell, said liquid supplying passage or said liquid discharging passage.

7. The liquid analyzing apparatus according to any of claims 1 to 6, wherein said certain value of pressure is lower than the withstanding pressure of said liquid analyzing flow cell (3; 50).

8. The liquid analyzing apparatus according to claim 5, wherein the portion between the end portion of the outer layer of said liquid discharging passage having two-layer structure and said liquid analyzing flow cell are kept liquid-proof, a spring member (7; 60) being arranged in fixing to said end portion of the outer layer in such that the spring member pushes said end portion of the inner layer to said liquid analyzing flow cell.

9. The liquid analyzing apparatus according to claim 6, wherein the portion between the end portion of the outer layer of said liquid supplying passage having two-layer structure and said liquid analyzing flow cell are kept liquid-proof, a spring member (7) being arranged in fixing to said end portion of the outer layer in such that the spring member pushes said end portion of the inner layer to said liquid analyzing flow cell.

10. The liquid analyzing apparatus according to any of claims 5 to 9, wherein a plurality of electrodes (100, 101) keeping insulating state one another are arranged between the inner layer and the outer layer of said liquid supplying passage (9, 10) having a two-layer structure or said liquid discharging passage having a two-layer structure, means for measuring the resistivity between electrodes is provided in each of said plurality of electrodes.

11. A liquid analyzing apparatus having a liquid analyzing flow cell, wherein a tube connecting mechanism having a seal mechanism using a spring member (7) is provided in the liquid outlet of the flow cell and/or the liquid inlet of the flow cell, liquid being discharged through said tube connecting mechanism when the pressure in the flow cell becomes above a pressure determined by said spring member.

12. The liquid analyzing apparatus according to claim 11, wherein the tube connected to said tube connecting mechanism has a double tube structure, liquid to be analyzed flowing in the inner tube, discharged liquid flowing at pressure rise flowing between said inner tube and the outer tube.

13. A liquid analyzing apparatus according to claim 12, wherein the outer layer portion of said tube is made of a light-proof material.
